# EUROPÄISCHE PATENTSCHRIFT

(11) **EP 1 396 710 B1**
(45) Veröffentlichungstag und Bekanntmachung des Hinweises auf die Patenterteilung: **14.03.2007**
(21) Anmeldenummer: 03025021.1
(22) Anmeldetag: 18.03.1998
(51) Int. Cl.: G01F 23/284

(54) **Mikrowellen-Füllstandsmessgerät geeignet zum Betrieb bei hohen Temperaturen und/oder hohen Drücken und/oder chemisch agressiver Umgebung**
Microwave level gauge capable of operation at high temperatures and/or high pressures and/or in a chemically agressive environment
Capteur du niveau à microondes capable de fonctionner à hautes temperatures et/ou hautes pressions et/ou dans un environnement chimiquement agressif

(43) Veröffentlichungstag der Anmeldung: 10.03.2004
(62) Teilanmeldung aus: 98104932.3
(73) Patentinhaber: VEGA Grieshaber KG, 77709 Wolfach (DE)
(72) Erfinder: Fehrenbach, Josef, 77716 Haslach i. K. (DE); Motzer, Jürgen, 77723 Gengenbach (DE); Dietmeier, Jürgen, 77756 Hausach (DE); Rapp, Günter, 77709 Wolfach (DE)
(74) Vertreter: Maiwald Patentanwalts GmbH

(56) Entgegenhaltungen:
- EP-A- 0 780 664
- WO-A-97/12211
- DE-A- 4 327 333
- US-A- 4 566 321
- US-A- 5 279 156
- US-A- 5 351 036
- US-A- 5 703 289

## Beschreibung

Die Erfindung liegt auf dem Gebiet der berührungslosen Messung von Materialfüllständen in Behältern unter Verwendung der Mikrowellenmesstechnik und betrifft insbesondere ein für die Durchführung derartiger Messungen unter extremen Messbedingungen wie hohen Temperaturen und/oder hohen Drücken und/oder Vorliegen chemisch aggressiver Stoffe geeignetes Mikrowellen-Füllstandsmessgerät.

Es gibt eine Vielzahl von unterschiedlichen Messprinzipien, und darauf basierenden Messgeräten, um den Füllstand von Füllgütern in Behältern zu messen. Liegen in dem Behälter jedoch extreme Messbedingungen vor, wie etwa ungewöhnlich hohe Temperaturen, und/oder ungewöhnlich hohe Drücke oder auch chemisch aggressive Substanzen, so wurden bisher für derartige Füllstandsmessungen ausschließlich Kontaktmesstechniken, nämlich kapazitive und hydrostatische Messverfahren, sowie kombinierte Zu- und Abflussmessungen verwendet.

Bei Verwendung des kapazitiven Messverfahrens bilden Füllgut und Behälter zusammen mit einer Messsonde einen elektrischen Kondensator. Die Füllhöhe wird hierbei über eine Messung der Kondensatorkapazität erfasst. Der Sensor ist meist nicht universell einsetzbar, sondern ausschließlich für eine spezielle Anwendung konzipiert. Bei elektrisch leitenden Füllgütern, sind je nach Füllgut, Druck und Temperatur spezielle Isolationswerkstoffe für die Messsonde auszuwählen. Treten an der Messsonde zusätzlich starke Füllgutanhaftungen auf, muss diese überdies mit anhaftungsneutralen Werkstoffen überzogen werden.

Das hydrostatische Messverfahren hingegen misst die Füllstandshöhe der Füllgüter über eine Bestimmung deren hydrostatischer Drücke. Es eignet sich jedoch nur für in ihrer Konsistenz fluide bis pastöse Materialien. Feste oder hoch-viskose Füllgüter sind dem hydrostatischen Messverfahren prinzipiell nicht zugänglich.

Kombinierte Zu- und Abflussmessungen ermöglichen eine - meist nur grobe - Abschätzung der Füllstandstandshöhe fließfähiger Füllgüter aus der jeweils durch Differenz von zugeführter zu abgeführter Menge bestimmten, im Behälter befindlichen Füllgutmenge. Kapazitive Messsonden, hydrostatische Druckmessumformer und Durchflussmessgeräte werden von der Anmelderin hergestellt und vertrieben.

WO 97 / 12211 beschreibt eine Füllstands-Messvorrichtung, die mit einem Flansch, der eine Behälteröffnung umschließt, befestigt ist und einen Wellenleiteradapter zum Übertragen von Mikrowellenenergie von einer Mikrowellenenergiequelle zu einer Öffnung einer Antenne an der Innenseite des Behälters. Der Wellenleiter umfasst Öffnungen, die Mikrowellen zu der Antenne führen. Eine mechanische Barriere in einem Bereich der Öffnung verhindert einen Austritt eines unter Druck stehenden Fluids oder einer Flüssigkeit aus dem Inneren des Tanks und dient auch dazu, die Impedanz zu reduzieren, die zwischen mit dem Luft, Dampf und Flüssigkeit gefüllten Wellenleiter und den Antennenöffnungen vorliegt. Der Adapter umfasst eine Adapterplatte mit einer zweiten Wellenleiteröffnung. Die Öffnung weist eine abdichtende mechanische Barriere auf, die sich auf der gleichen Mittelachse wie die obere mechanische Abdeckung befindet.

Die gemäß dem Stand der Technik verwendeten Füllstandsmessgeräte, weisen den Nachteil auf, dass stets ein materieller Kontakt der Messsonde mit dem zu messenden Material notwendig ist. Hieraus ergeben sich eine Reihe von nur schwierig zu bewältigenden technologischen Problemen, die schon bei Geräten für den Einsatz unter wenig beanspruchten Bedingungen eine relativ aufwendige und deshalb kostspielige Produktherstellung zur Folge haben.

Um diese Nachteile des auf bestimmte Füllgüter beschränkten Anwendebereiches und der entsprechend hohen Kosten zu vermeiden, wäre es deshalb äußerst wünschenswert, über einen Füllstandssensor zu verfügen, der auf einer berührungslosen, für praktisch alle Füllgüter tauglichen Messtechnik basiert und auch für den Betrieb unter extremen Messbedingungen geeignet ist.

Aufgabe der Erfindung ist es daher, ein Messgerät für die Bestimmung des Füllstandes von Füllgütern in Behältern auch unter extremen Messbedingungen, wie hohen Temperaturen und/oder hohen Drücken und/oder Vorliegen chemisch aggressiver Substanzen, unter Verwendung einer für praktisch alle Füllgüter tauglichen, berührungslosen Messtechnik zu schaffen.

Diese Aufgabe wird erfindungsgemäß durch ein Gerät gemäß dem Anspruch 1 gelöst.

Eine besonders vorteilhafte Weiterbildung der Erfindung sieht vor, dass der Betrieb des Füllstandsmessgerätes hierbei auch bei Temperaturen oberhalb von 300°C und bei Drücken oberhalb von 35 bar erfolgen kann.

Herkömmliche Füllstandsmessgeräte, welche auf der Laufzeitmessung eines Mikrowellensignals basieren, sind zum Betrieb bei solchen extremen Bedingungen nicht geeignet. Der grundsätzliche Aufbau und die Funktionsweise eines solchen, im Stand der Technik bekannten Messgerätes ist etwa folgender:

Die Steuerung des Sende-/Empfangsvorganges, sowie die Auswertung des Empfangssignals erfolgt in einer zentralen Steuer- und Messeinheit, welche in praxi meist durch einen in einem Gehäuse aufgenommenen Elektronikeinsatz realisiert wird. Das Sende- sowie auch das Empfangssignal werden über eine den Elektronikeinsatz mit einer Sende-/Empfangseinheit verbindende elektrische Leitung, etwa ein Koaxialkabel, wechselseitig übertragen. Die Sende-/Empfangseinheit zum Aussenden und Empfangen des Mikrowellensignals umfasst eine Hornantenne bestehend aus einer Antennenspeisung und Horn. Die Antennenspeisung ihrerseits besteht aus einem gefüllten Hohlleiter mit Einkopplung des Mikrowellensignals über einen Erregerstift. Der Übergang vom gefüllten Hohlleiter zum Horn wird durch einen linearen Taper elektrisch angepasst. Das von der Füllgutoberfläche reflektierte Mikrowellensignal wird anschließend von der Antenne empfangen und über die elektrische Leitung an die zentrale Steuer- und Messeinheit zur Bestimmung der Füllguthöhe geleitet. Die Gerätemontage am Behälter erfolgt über eine mit dem Gerätegehäuse verbundene Einbaueinheit, meist ein stabil mit dem Behälter verbindbarer Montageflansch. Gewöhnlicherweise im Behälter freiliegend und damit den Behälterbedingungen ausgesetzt ist der Teil der Einbaueinheit, welcher meist Horn, Taper und Hohlleiter umfasst. In herkömmlicher Bauweise, welche zum Beispiel eine Abdichtung der Hohlleiterfüllung zum Hohlleiter mittels einer Elastomer-Dichtung vorsieht, besteht keine Druckfestigkeit und Druckdichtigkeit gegenüber hohen Behälterdrücken. Zudem ist das Messgerät, insbesonders die empfindliche Mess- und Steuerelektronik, über die Einbaueinheit praktisch gänzlich den hohen Behältertemperaturen ausgesetzt. Ohne besondere Vorkehrungen zum Schutze gegen schädigende Einflüsse sind bekannte Mikrowellen-Füllstandsmessgeräte unter extremen Behälterbedingungen deshalb nicht einsetzbar.

Um ein herkömmliches Mikrowellen-Füllstandsmessgerät auch unter extremen Messbedingungen zu betreiben, sind erfindungsgemäß spezielle Vorrichtungen und bauliche Abwandlungen vorgesehen, welche eine Isolierung der empfindlichen Geräteteile gegenüber den potentiell zerstörerischen Behälterbedingungen bewirken. Diese Vorrichtungen bewirken eine Druckdichtigkeit und Druckfestigkeit gegenüber hohen Behälterdrücken, eine Abschirmung der hohen Behältertemperatur, sowie auch eine Abschirmung chemisch aggressiver Stoffe. Insbesonders wird hierbei die empfindliche Mess- und Steuerelektronik sowie die Sende- und Empfangseinheit vor schädigenden Einflüssen bewahrt.

Die Vorrichtungen zur Schaffung von Druckdichtigkeit und -festigkeit ermöglichen es, dass der Behälterdruck am Taper angreift und von der Hohlleiterfüllung aufgenommen wird. Die Hohlleiterfüllung ist druckstabil mit dem Hohlleiter verbunden. Der Hohlleiter wird dann fest mit der Einbaueinheit, insbesondere dem Montageflansch verbunden, vorzugsweise verschweißt, so dass die am Taper angreifende Druckkraft über den Hohlleiter auf den Montageflansch übertragen wird.

Die Vorrichtungen zur Druckdichtigkeit und Druckfestigkeit bewirken überdies eine Abschirmung gegenüber chemisch aggressiven Stoffen.

Wesentliche Leistungsverluste, etwaig einhergehend mit Störungen der Mikrowellen-übertragung, wie etwa unerwünschten Reflexionen durch starke Impedanzänderungen ("Klingeln") und dergleichen, treten durch die erfindungsgemäßen Vorrichtungen nicht auf.

In einer bevorzugten Ausführungsform der Erfindung ist zur thermischen Abschirmung der hohen Behältertemperaturen die Gehäuseverbindung zwischen Elektronikeinsatz und Montageflansch zu einem beide Geräteteile trennenden Distanzrohr verlängert. Durch das Temperaturgefälle entlang des Distanzrohres und die räumliche Trennung wird eine thermische Abschirmung der damit verbundenen Geräteteile erzielt. Für das Material des Distanzrohres ist bevorzugt ein Metall, besonders bevorzugt Edelstahl, vorgesehen.

In vorteilhafter erfindungsgemäßer Ausgestaltung ist als Vorrichtung zur thermischen Abschirmung wenigstens eine, das Distanzrohr in voneinander thermisch isolierte Abschnitte quer unterteilende Trennwand im Distanzrohr angeordnet. Als Material für die Trennwand ist insbesondere ein Material mit geringer Wärmeleitfähigkeit, vorzugsweise Teflon, vorgesehen. Dieses Bauelement sorgt für eine weitere Vergrößerung des Temperaturgefälles zwischen den beiderseitig des Distanzrohres befindlichen Geräteteilen. Hierbei wird nicht nur die unmittelbare Wärmeleitung entlang der Wandung des Distanzrohres, sondern überdies auch die Wärmeübertragung im Inneren des Distanzrohrs (durch Konvektion, Strahlung und dgl.) unterbunden. Somit wird es ermöglicht, dass auch innerhalb des Distanzrohres hitzeempfindliche Geräteteile in den thermisch isolierten, kälteren Abschnitten angeordnet werden können.

Eine weitere erfindungsgemäße Ausgestaltung sieht zur thermischen Abschirmung hitzeempfindlicher Teile als Teil der elektrischen Leitung zwischen Elektronikeinsatz und Hohlleiter eine Luftkoaxialleitung vor. Die Luftkoaxialleitung ermöglicht eine breitbandige Übertragung des Sende-/Empfangssignals unter extremen thermischen Bedingungen. Außenleiter und Innenleiter der Luftkoaxialleitung werden vorzugsweise aus Metall hergestellt. Im Gegensatz hierzu sind gewöhnliche Hochfrequenzkabel bei hohen Temperaturen (oberhalb 300 °C) hierfür nicht einsetzbar. Vorzugsweise wird die Luftkoaxialleitung so angeordnet, dass die Mikrowellenimpulse hieraus über den Erregerstift direkt in das Einkoppelstück des Hohlleiters einkoppeln. Besonders bevorzugt wird hierbei, dass sich die thermisch isolierende Trennwand innerhalb des Distanzrohres in der Nähe der Verbindung der vom Elektronikeinsatz kommenden elektrischen Leitung mit der zum Taper führenden Luftkoaxialleitung befindet; hierdurch wird vorteilhaft innerhalb des Distanzrohres eine Wärmescheide etwa auf Höhe des Überganges in die Luftkoaxialleitung gestaltet.

Erfindungsgemäß ist zur Verbindung der Hohlleiterfüllung am Hohlleiter wenigstens ein Teil der Hohlleiterfüllung aus einem für Mikrowellen durchlässigen, hitzebeständigen Material, vorzugsweise Glas, ausgebildet. Durch diese Maßnahme kann unter Anwendung herkömmlicher Schmelz-, Schweiß- und Lötverfahren eine auch bei hohen Drücken druckbeständige Verschmelzung, Verschweißung oder Verlötung des Glases mit der umgebenden metallischen Hülse ohne vorherige Metallisierung der Hohlleiterfüllung erreicht werden. Diese Maßnahme kann, muss aber nicht, zusammen mit einzelnen oder allen der anderen oben genannten erfindungsgemäßen Einrichtungen vorgesehen werden.

Neben den Vorrichtungen zur thermischen Isolierung hitzeempfindlicher Geräteteile sind weiters erfindungsgemäß druckstabile Vorrichtungen vorgesehen, welche eine hochgradige Druckdichtigkeit und eine Dichtigkeit gegenüber chemisch aggressiven Stoffen bewirken. Diese Vorrichtungen umfassen grundsätzlich alle geeigneten Dichtmittel, welche so angeordnet werden können, dass eine axiale und/oder radiale Dichtung resultiert. Insbesondere sind hierfür Metalldichtungen, Graphitdichtungen und dergleichen geeignet. Die Dichtwirkung wird hierbei vorzugsweise durch den Pressdruck einer auf das Dichtmittel einwirkenden Druckschraube erzielt. Zusätzlich können zwischen Druckschraube und Dichtmittel weitere Elemente vorhanden sein, welche etwa ein Verdrehen des Dichtmittels bei Anziehen der Druckschraube vermeiden. Für die druckstabile Abdichtung der Verbindungsstellen benachbarter Geräteteile, etwa zwischen Hohlleiter und Montageflansch, oder Distanzrohr und Montageflansch sind hingegen gewöhnliche Verschweißungen vorgesehen. Vorzugsweise reicht die Schweißnaht hierbei etwa 1 mm tief in den Verbindungsspalt hinein.

Im folgenden werden Ausführungsformen der Erfindung dargestellt, welche die obig dargestellten Vorrichtungen zur termischen Abschirmung der hohen Behältertemperaturen sowie die Dichtmittel zur Abdichtung des Behälterdruckes und chemisch aggressiver Stoffe mit illustrieren. Die ersten drei Ausführungsformen unterscheiden sich durch unterschiedliche Vorrichtungen zur Befestigung der Hohlleiterfüllung im Hohlleiter, wobei nur die erste dieser drei Ausführungsformen eine erfindungsgemäße Ausführungsform darstellt. Die nächst dargestellte Ausführungsform ist dadurch gekennzeichnet, daß das Distanzrohr ein Hohlleiter ist. Die als fünfte dargestellte, ebenso Ausführungsform schließlich ist durch eine Stielantenne anstelle einer Homantenne charakterisiert. Einzelne Merkmale dieser Ausführungsformen lassen sich, wie aus der folgenden Beschreibung ersichtlich, zu weiteren hier nicht beschriebenen Ausführungsformen der Erfindung neu kombinieren

Erfindungsgemäß ist zur Druckaufnahme des Behälterdruckes am Taper eine druckstabile Verschweißung, Verlötung, Verschmelzung und dergleichen, der Hohlleiterfüllung mit dem Hohlleiter durch bekannte Techniken vorgesehen. Der Hohlleiter enthält hierbei zusätzliche Verbindungselemente, wie Löt- oder Schweißhülsen, wobei diese selbst dann druckstabil am Hohlleiter angebracht sind. Gemäß der Erfindung wird diese Löt- oder Schweißhülse 2-teilig ausgeführt, wobei ein Teil aus einem dem Wäremeausdehnungskoeffizienten der Hohlleiterfüllung angepassten Material hergestellt ist. Um eine Korrosion der Verbindungsnähte zu verhindern, wird vorzugsweise in axialer Richtung zwischen der Verbindungsnaht und dem Behälterinneren eine Dichtung zur Abschirmung chemisch aggressiver Stoffe angeordnet.

Eine nicht erfindungsgemäße Ausführungsform sieht zur Druckaufnahme des Behälterdruckes am Taper eine druckstabile, thermische Verpressung der Hohlleiterfüllung mit dem Hohlleitermantel vor. Der Hohlleitermantel ist dabei so geformt, dass die Kontaktfläche mit dem Taper ausreichend groß ist, um eine druckstabile Verpressung zu gewährleisten. Erfindungsgemäß kann die thermische Verpressung des Tapers mit dem Hohlleitermantel ohne zusätzliche an der Verpressung beteiligte Elemente vorgesehen werden. Zwischen den beiden zu verpressenden Teilen könnte sich vorzugsweise auch eine Schicht aus duktilem Material, vorzugweise Gold, befinden. Bei der thermischen Verpressung werden die Verpressungstemperaturen und die Materialien von Taper und Hohlleitermantel erfindungsgemäß so ausgewählt, daß die Verpressung auch bei sehr hohen Temperaturen, insbesondere bei Temperaturen oberhalb von 300 °C stabil bleibt. Ein besonders bevorzugtes Material für den Hohlleitermantel ist hierzu VA-Stahl.
Bei einer alternativen Ausgestaltung ermöglichen es zusätzliche, die Verpressung fixierende Elemente, die Verpressung ggf. auch bei vergleichsweise niedrigeren Temperaturen, insbesondere auch bei Raumtemperatur durchzuführen. Durch diese zusätzlichen Elemente bleibt die Verpressung dann auch bei extrem hohen Behältertemperaturen stabil, obwohl die Verpressung bei relativ niedrigeren Temperaturen erfolgt ist. Wesentliches Kennzeichen dieser zusätzlichen, die Verpressung fixierenden Elemente, ist, dass deren Material einen geringeren Wärmeausdehnungskoeffizienten hat als das Material des Hohlleitermantels. Somit wird aufgrund der geringeren Wärmeausdehnung des zusätzlichen Elementes die Verpressung vor allem bei Erwärmung der Pressstelle durch hohe Behältertemperaturen gesichert. Besonders bevorzugt ähnelt der Wärmeausdehnungskoeffizient des Materials des zusätzlichen Elementes demjenigen der Hohlleiterfüllung. Bei dieser Ausgestaltung sind zwei unterschiedliche, gleichermaßen bevorzugte Varianten vorgesehen, bei denen sich das zusätzliche fixierende Element entweder in der Pressstelle zwischen Hohlleiterfüllung und Hohlleitermantel befindet, oder aber den Hohlleitermantel an der Pressstelle umgibt. Befindet sich das zusätzliche fixierende Element zwischen der Hohlleiterfüllung und dem Hohlleitermantel, so wird als besonders bevorzugtes Material dafür eine Legierung wie Hastelloy vorgesehen. Umgibt das zusätzliche Element hingegen die Pressstelle, so ist als Material hierfür eine Legierung wie Vacon 70 besonders bevorzugt.

Eine andere erfindungsgemäße Ausführungsform sieht zur Aufnahme des Behälterdruckes am Taper eine Verdickung der Hohlleiterfüllung vor. Hierbei stützt sich die Verdickung der Hohlleiterfüllung in der axialen Druckrichtung der Hohlleiterfüllung gegen eine ausreichend stabile Auflage insbesondere in Form einer Druckschulter. Die Druckschulter kann dabei durch eine Druckschraube und ggf. einem weiteren Element, insbesondere einen zusätzlichen Druckring, gebildet werden. Durch die Verschraubung mit dem Einbauteil, vorzugsweise mit dem Hohlleitermantel, gewährleistet die Druckschraube eine ausreichend stabile Abstützung der Verdickung der Hohlleiterfüllung an der Druckschulter auch bei extrem hohen Behälterdrücken. Um nicht nur die Druckfestigkeit durch die Verdickung der Hohlleiterfüllung und die Druckschulter, sondern auch die Druckdichtigkeit gegenüber dem Behälterdruck sicherzustellen, sind zudem zwischen der Verdickung und dem Behälterinneren hierzu geeignete Dichtmittel vorgesehen. Besonders bevorzugt sind als Dichtmittel ein Graphitring, eine Graphitdichtung vom Typ "Spiraltherm" oder eine Metalldichtung vom Typ "Helicoflex". Druckwirkung auf das Dichtmittel wird hierbei vorzugsweise durch die Verdickung der Hohlleiterfüllung, ggf. unter Behelf eines Druckringes, übertragen. Weiterhin besonders bevorzugt ist eine Verdickung der Hohlleiterfüllung, welche in ihrer axialen Länge der halben Wellenlänge der geleiteten Mikrowellen entspricht. Durch die Ausbildung der Verdickung als Lambda/2-Transformationsschicht werden in vorteilhafter Weise Leistungsverluste der Mikrowellenleitung durch Reflexionen an der Verdickung vermieden. Dabei wird die Reflexion an der einen sprunghaften Impedanzänderung durch die Reflexion an der zweiten sprunghaften Impedanzänderung kompensiert.

Eine weitere erfmdungsgemäße Ausführungsform sieht für das Distanzrohr nicht nur die Funktion vor, eine räumliche und thermische Trennung der damit verbundenen Geräteteile zu erreichen, sondern zusätzlich, dass es als Lufthohlleiter zur Übertragung der Mikrowellen dient. Innerhalb des als Hohlleiter fungierenden Distanzrohres ist dann vorzugsweise zur thermischen Abschirmung hitzeempfindlicher Geräteteile eine für Mikrowellen durchlässige Trennwand aus einem gering wärmeleitfähigen Material, vorzugsweise Teflon, angeordnet. Mit Ausnahme der Luftkoaxialleitung können bei dieser Ausführungsform alle vorgenannten Vorrichtungen zur thermischen Abschirmung hoher Behältertemperaturen, die Vorrichtungen zur Druckdichtigkeit und Druckfestigkeit gegenüber hohen Behältertemperaturen, sowie der Dichtigkeit gegenüber chemisch aggressiven Stoffen ebenfalls eingesetzt werden. Bei dieser Ausführungsform sind in vorteilhafter Weise keine Kabel- und Leitungsverbindungen im Distanzrohr zwecks Übertragung der Mikrowellenimpulse erforderlich.

Eine weitere erfindungsgemäße Ausführungsform sieht statt einer Homantenne eine prinzipiell bekannte Stielantenne zur Aussendung der Mikrowellen in den Behälter vor. Die Vorrichtungen zur thermischen Abschirmung der hohen Behältertemperaturen, Druckdichtigkeit und Druckfestigkeit gegenüber hohen Behälterdrücken, sowie auch gegenüber chemisch aggressiven Substanzen zwischen dem Antennenstiel (der hier statt des Tapers vorgesehen ist) und dessen Halterung etc. sind analog den vorherigen Ausführungsformen ausgebildet. Diese Ausführungsform ist zur Materialfüllstandsbestimmung durch relativ kleine Behälteröffnungen geeignet.

Mit Ausnahme der Ausführungsform, in welcher das Distanzrohr als Lufthohlleiter fungiert, erfolgt bei allen Ausführungsformen die Einkopplung der Mikrowellen in die Hohlleiterfüllung entweder seitlich, d.h. entlang der axialen Länge der Hohlleiterfüllung, oder von hinten, d.h. an der dem Taper abgewandten Seite, vorzugsweise jedoch seitlich. Bei seitlicher Einkopplung wird die seitliche Stellung des Erregerstiftes in besonders bevorzugter Weise durch eine Abwinklung der Luftkoaxialleitung erzielt.

### Kurze Beschreibung der Figuren:

Fig. 1A ist ein schematisches Übersichtsdiagramm einer erfindungsgemäßen Ausführungsform des Füllstandsmessgerätes.
Fig. 1B zeigt in einem vergrößerten Ausschnitt der Fig. 1A die Sende-/Empfangseinheit einer erfindungsgemäßen Ausführungsform des Füllstandsmessgerätes.
Fig. 2A, 2B, 2C zeigen drei Varianten einer nicht erfindungsgemäßen Ausführungsform des Füllstandsmessgerätes (Verpressung der Hohlleiterfüllung mit dem Hohlleitermantel).
Fig. 3A, 3B zeigen zwei Varianten einer alternativen erfindungsgemäßen Ausführungsform des Füllstandsmessgerätes (Verdickung der Hohlleiterfüllung).
Fig. 4 zeigt eine erfindungsgemäße Variante der Ausführungsform der Fig. 1.
Fig. 5 zeigt eine Ausführungsform für die seitliche Einkopplung des Erregerstiftes in das Einkopplungsstück des Tapers.
Fig. 6 zeigt eine weitere erfindungsgemäße alternative Ausführungsform des Füllstandsmessgerätes, worin das Distanzrohr ein Mikrowellen-Hohlleiter ist.
Fig. 7 zeigt eine weitere erfindungsgemäße alternative Ausführungsform des Füllstandsmessgerätes, worin die Hornantenne durch eine Stielantenne ersetzt ist.

### Detaillierte Beschreibung der speziellen Ausführungsbeispiele:

### (Gleiche Geräteelemente erhalten in den Figuren jeweils analoge Bezugszeichen)

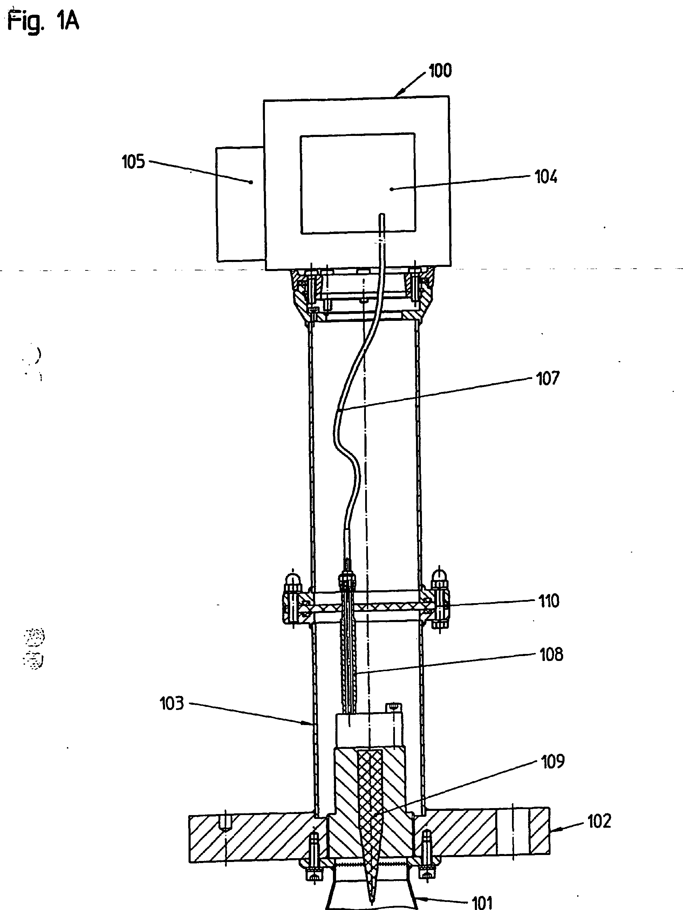

Fig. 1A ist eine schematische Übersichtsdarstellung eines erfindungsgemäßen - Füllstandsmessgerätes. Das Mikrowellen-Füllstandsmessgerät setzt sich aus Steuer-/Messeinheit (100), Sende-/Empfangseinheit (101), Einbaueinheit (102), und einem, die Steuer-/Messeinheit mit der Sende-/Empfangseinheit verbindenden stählernen Distanzrohr (103) zusammen. Die Steuer-/Messeinheit (100) umfasst ein Gehäuse mit einem Elektronikeinsatz (104) und einen Klemmraum (105). Wesentliche Aufgabe der Steuer /Messeinheit (100) ist die Gerätesteuerung, insbesondere die Steuerung des Sende-/Empfangsvorganges, sowie die anschließende Auswertung des empfangenen Mikrowellensignals.

Im Distanzrohr (103) befindet sich die elektrische Leitung, bestehend aus einem Kabel (107) und einer Luftkoaxialleitung (108), zur wechselseitigen Übermittlung der Mikrowellenimpulse zwischen Elektronikraum und Sende-/Empfangseinheit. Die Einkopplung der Mikrowellenimpulse erfolgt in eine Hohlleiterfüllung (109). Im Distanzrohr (103) ist zusätzlich eine Teflontrennwand (110), nahe der Verbindung des Kabels (107) mit der Luftkoaxialleitung (108) angeordnet. Hierdurch wird eine thermische Abschirmung der mit dem Distanzrohr verbundenen Geräteelemente, insbesondere auch der Geräteelemente innerhalb des Distanzrohres erreicht.

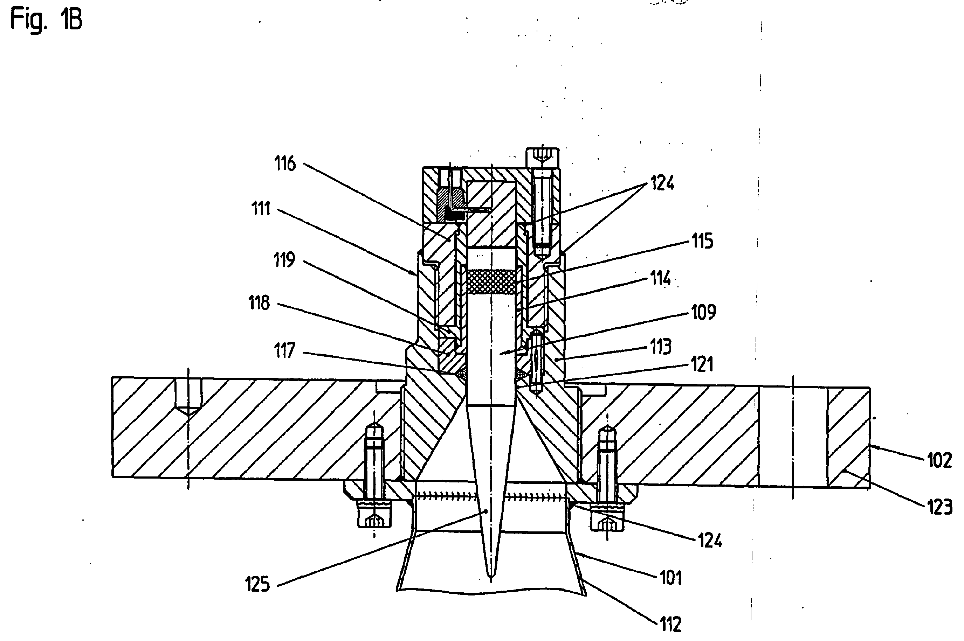

Fig. 1B zeigt in einem Ausschnitt der Fig. 1A die Sende-/Empfangseinheit des erfindungsgemäßen Mikrowellen-Füllstandsmessgerätes. In der Sende-/Empfangseinheit (101) sind die Hohlleiterfüllung (109), ein Taper (125), ein Hohlleiter (111) und ein Horn (112) angeordnet. Der Hohlleiter (111) setzt sich aus einem Hohlleitermantel (113), einer Löthülse (114), einer Lötnaht (115), einer Druckschraube (116), einer Metalldichtung (117), einem Druckring (118) und einer Scheibe (119) zusammen. Hohlleiterfüllung (109), Taper (125), Hohlleitermantel (113) und Horn (112) liegen zur Übermittlung der Mikrowellenimpulse gegenüber dem Behälterinneren frei.

Die Hohlleiterfüllung (109) ist in die Löthülse (114) eingelötet. Die Löthülse ihrerseits ist über den Hohlleitermantel (113) an der Einbaueinheit (102) fixiert. Die Metalldichtung (117) ist unter Verwendung des Druckringes (118) als kombinierte axial/radiale Dichtung ausgeformt. Die Dichtwirkung wird über die Druckschraube (116), welche über die Scheibe (119) und den Druckring (118) auf die Metalldichtung einwirkt, erzielt. Die Druckschraube erhält den für die Dichtwirkung notwendigen Gegendruck, durch Auflage der Metalldichtung auf einer Druckschulter (121) des Hohlleitermantels (113). Die Scheibe (119) verhindert ein Verdrehen der Metalldichtung bei Fixierung der Druckschraube. Durch die Metalldichtung wird eine Druckdichtigkeit von Hohlleiterfüllung und Hohlleiter gegenüber extrem hohen Behälterdrücken erzielt.

Die Lötnaht (115) ist so ausgeformt, dass der an der Hohlleiterfüllung angreifende Behälterdruck durch die Lötnaht aufgenommen, und über die fixierte Verbindung zwischen Löthülse und Hohlleitermantel auf die Einbaueinheit übertragen wird. Die Metalldichtung (117) verhindert überdies eine Korrosion der Lötnaht (115) durch ein Abschirmen von chemisch aggressiven Stoffen aus dem Behälterinneren.

Als Materialien sind für die Hohlleiterfüllung (109) vorzugsweise keramisches Al₂O₃, und für den Hohlleiter (113) vorzugsweise Edelstahl vorgesehen.

Die Einbaueinheit (102) umfasst einen Montageflansch (123), welcher am Behälter fixiert wird. Schweißnähte (124) zwischen Löthülse und Druckschraube, Druckschraube und Hohlleitermantel, Hohlleitermantel und Montageflansch, Montageflansch und Distanzrohr sorgen für mechanische Fixierung und Druckdichtigkeit gegenüber extrem hohen Behälterdrücken. Die Schweißnähte sind so geformt, dass sie genügend tief in den jeweiligen Verbindungsspalt hineinreichen.

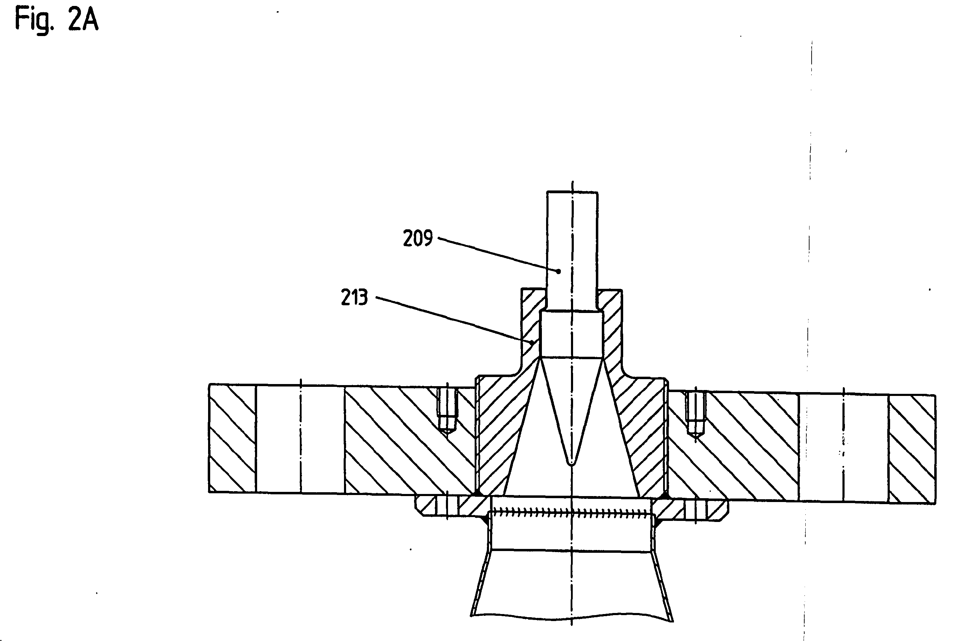

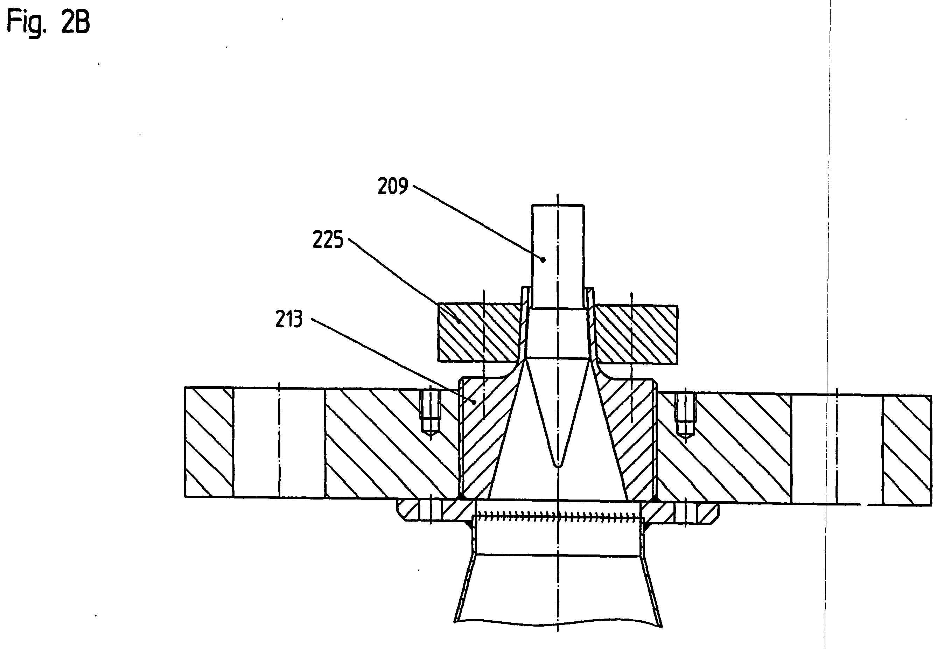

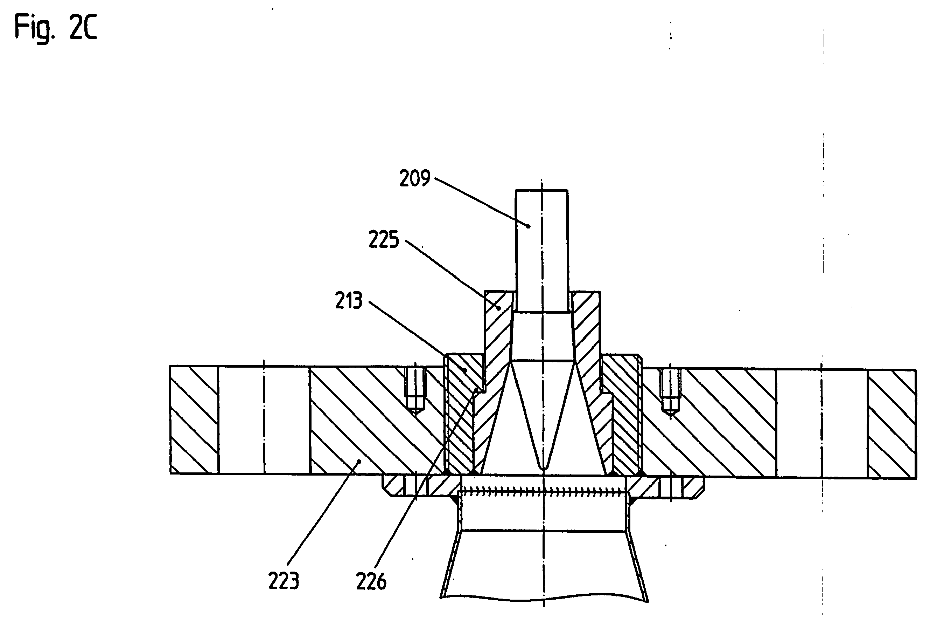

Fig. 2A, 2B und 2C zeigen drei alternative Varianten einer nicht erfindungsgemäßen Ausführungsform des Füllstandsmessgerätes, wobei die Hohlleiterfüllung mit dem Hohlleitermantel zur Aufnahme des Behälterdruckes am Taper verpresst ist.

Fig. 2A zeigt die thermische Verpressung der Hohlleiterfüllung (209) mit dem Hohlleiter, welcher in dieser Ausführungsform nur aus dem Hohlleitermantel (213) besteht. Der Hohlleitermantel ist ringförmig an den Hohlleiter füllig anliegend geformt, so dass eine hinreichend große Verpressfläche mit der Hohlleiterfüllung entsteht und eine hinsichtlich hoher Behälterdrücke ausreichend feste Verbindung gebildet wird. Die Materialien für Hohlleiterfüllung und Hohlleitermantel sind so gewählt, dass die Verpressung auch bei sehr hohen Behältertemperaturen den hohen Behältertemperaturen standhält.

Fig. 2B zeigt eine Variante zur Ausführungsform der Fig. 2A, worin die Verpressstelle von einem zusätzlichen Element, hier einem Ring (225) aus einem thermisch dehnungsarmen Material umgeben ist.

Als Material für den Ring wird eine Legierung, wie Vacon 70 vorgesehen.

Die Verpressung kann hierbei auch bei niedrigen Temperaturen, insbesondere auch bei Raumtemperatur erfolgen. Der Ring sichert auch bei hohen Behältertemperaturen die Pressstelle, obwohl die Verpressung ggf. bei niedrigeren Temperaturen ausgeführt werden kann. Die Ausgestaltung des Hohlleitermantels (213) hinsichtlich der Pressstelle unterscheidet sich nicht von der vorhergehenden Variante.

Fig. 2C zeigt eine Abwandlung zur Fig. 2B, worin der wesentliche Unterschied darin liegt, dass ein zusätzliches Element (225) aus einem dehnungsarmen Material die Pressstelle nicht umgibt, sondern zwischen Hohlleiterfüllung (209) und Hohlleitermantel (213) angeordnet ist.

Als Material für das zusätzliche Element (225) ist eine Legierung, wie Hastelloy, vorgesehen.

Auch bei dieser Variante kann die Verpressung bei niedrigen Temperaturen, insbesondere Raumtemperatur erfolgen. Die Pressstelle ist durch das zusätzliche Element (225) auch bei hohen Behältertemperaturen gesichert. Der Hohlleitermantel (213) ist in dieser Variante so ausgeformt, dass eine Druckübertragung vom zusätzlichen Element (225) erfolgen kann. Die Druckübertragung erfolgt insbesondere über eine Schweißnaht und über eine Druckschulter (226), welche am Hohlleitermantel ausgebildet ist. Der Hohlleitermantel ist hierbei seinerseits mit dem Montageflansch (223) durch eine Schweißnaht fest verbunden.

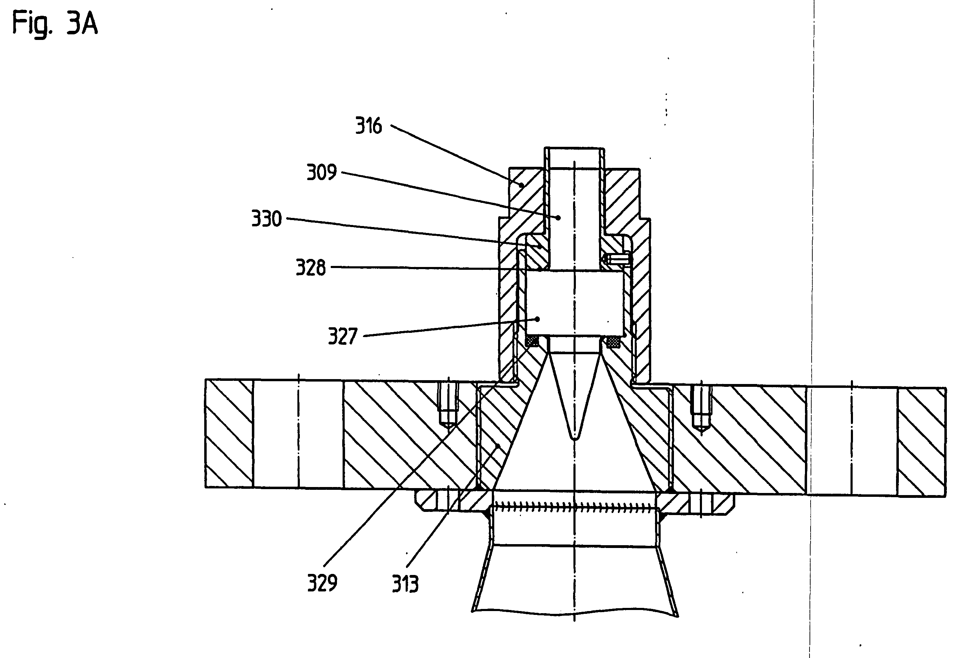

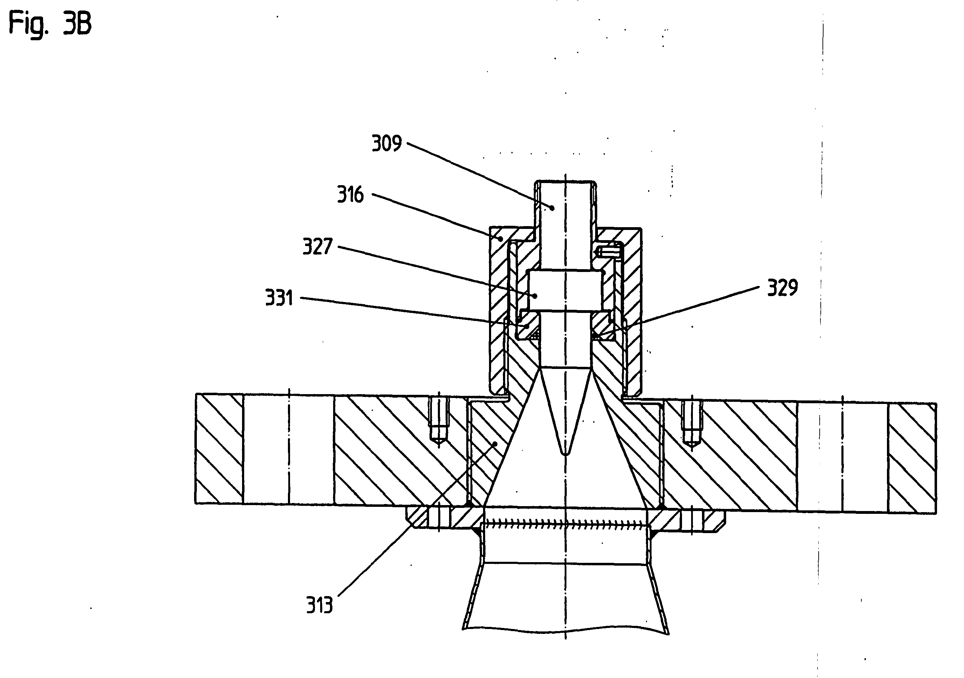

Fig. 3A und Fig. 3B zeigen zwei Varianten einer weiteren alternativen erfindungsgemäßen Ausführungsform des Füllstandsmessgerätes. Diese Ausführungsform ist wesentlich durch eine Verdickung (327) der Hohlleiterfüllung (309), ausgestaltet als "Lambda/2-Verdickung", charakterisiert. Beide Varianten unterscheiden sich nur durch die Anordnung der Ringdichtungen: während in Fig. 3A die Ringdichtung axial angeordnet ist, ist Fig. 3B durch eine kombinierte axial/radiale Anordnung der Ringdichtung gekennzeichnet.

In Fig. 3A ist, zum Zweck der Druckaufnahme an der Hohlleiterfüllung (309), eine Lambda/2-Verdickung (327) der Hohlleiterfüllung in Kombination mit einer axialen Ringdichtung (329) dargestellt. Die Druckaufnahme an der Hohlleiterfüllung erfolgt dergestalt, daß sich die Hohlleiterfüllung mit der Verdickung (327), in axialer Druckrichtung der Hohlleiterfüllung, gegen eine Druckschulter (328) stützt. Die Druckschulter wird hierbei von einem Druckring (330) gebildet. Der Druckring wird durch eine Druckschraube (316) in seiner Lage fixiert. Die Ringdichtung (329) sorgt für eine Abdichtung gegenüber hohen Behälterdrücken und chemisch aggressiven Stoffen. Für die Ringdichtung ist ein Graphitring, eine Graphitdichtung vom Typ "Spiraltherm", oder eine Metalldichtung vom Typ "Helicoflex" vorgesehen. Die Druckschraube (316) übt über die Verdickung der Hohlleiterfüllung (327) eine Druckwirkung auf den Dichtring aus. Hierbei wird durch den Druckring (330) ein Verdrehen des Dichtringes bei Fixierung der Druckschraube vermieden. Der Dichtring ist dergestalt auf einem Vorsprung des Hohlleitermantels (313) angeordnet, dass hierbei ein Gegendruck zur Druckwirkung der Druckschraube resultiert.

Fig. 3B zeigt als Variante zur vorherigen Fig. 3A, eine "Lambda/2"-Verdickung der Hohlleiterfüllung (327) in Verbindung mit einer Ringdichtung (329) in axial/radialer Anordnung. Bei dieser Variante wird die Druckwirkung der Druckschraube (316) auf die Ringdichtung durch die Verdickung der Hohlleiterfüllung (327) und einem zusätzlichen Druckring (331) übertragen. Der Druckring ist auf seiner, dem Dichtring zugewandten Seite so abgeschrägt, dass in Verbindung mit dem Gegendruck der Hohlleiterfüllung (309) und des Hohlleitermantels (313) eine axial/radiale Dichtwirkung erzielt wird.

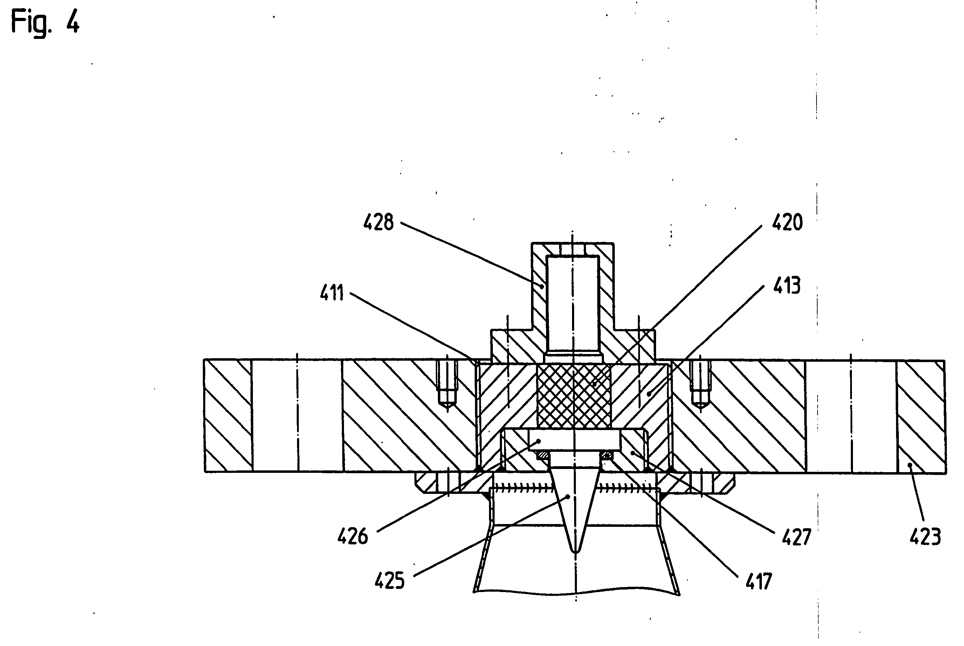

Fig. 4 zeigt eine alternative Variante der Sende-/Empfangseinheit. Hierbei wird ein mikrowellendurchlässiges Material, vorzugsweise Glas, in den Hohlleitermantel (413) z.B. eingelötet, eingeschmolzen oder eingepresst. Dieses Glasfenster (420) dichtet den Behälterinnenraum nach außen ab und nimmt den Behälterdruck auf. Zur besseren Anpassung der Mikrowellen an die Homantenne wird der Taper (425), vorzugsweise aus Glas oder Keramik, mittels eines Halteringes (427) am Hohlleitermantel angebracht. Ein Dichtring (417) zwischen dem Haltering (427) und einer Schulter (426) sorgt für die Druckdichtigkeit gegenüber den Behälterdrücken. Hiermit soll verhindert werden, dass Stoffe aus dem Behälterinneren in die Trennstelle zwischen Glasfenster (420) und Taper (425) eindringen. Der Haltering wird mit dem Hohlleitermantel und der Hohlleitermantel mit dem Montageflansch verschweißt. Ein aufgesetzter Hohlleiter (428) führt die Mikrowellenleistung zu. Als Material für das Glasfenster wird vorzugsweise Borsilikatglas verwendet. Die Länge des Glasfensters (420) ist vorzugsweise so zu wählen, dass dieses einen Lambda/2-Transformator bildet.

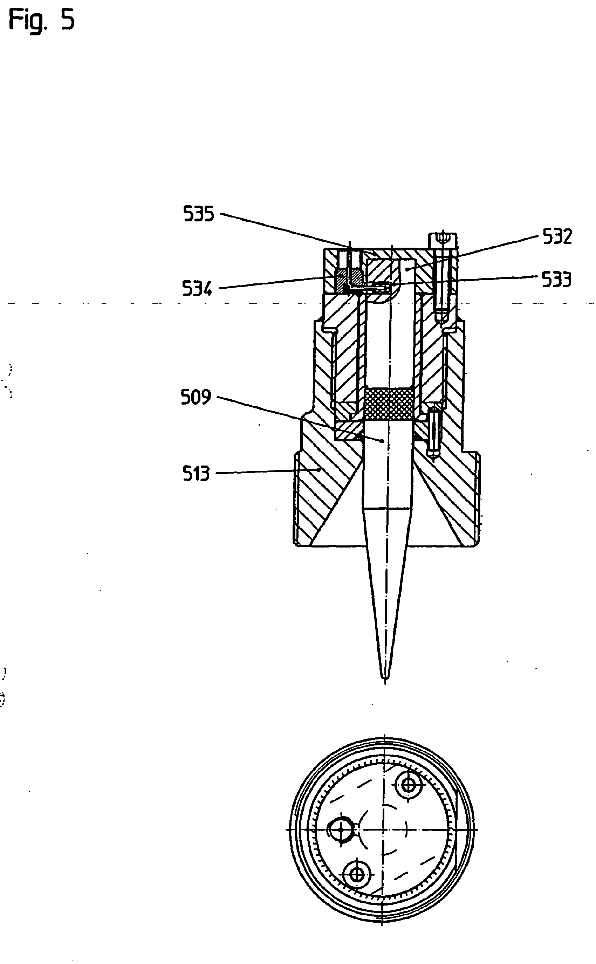

Fig. 5 zeigt die seitliche Übertragung der Mikrowellenimpulse in das Einkoppelstück (532) der Hohlleiterfüllung (509). Die Einkopplung erfolgt über den Erregerstift (533), welcher über einen Koaxialwinkel (534) in seine seitliche Position gebracht wird. Vorteilhaft ist ein Deckel (535) zur Abdeckung der Hohlleiterfüllung vorgesehen.

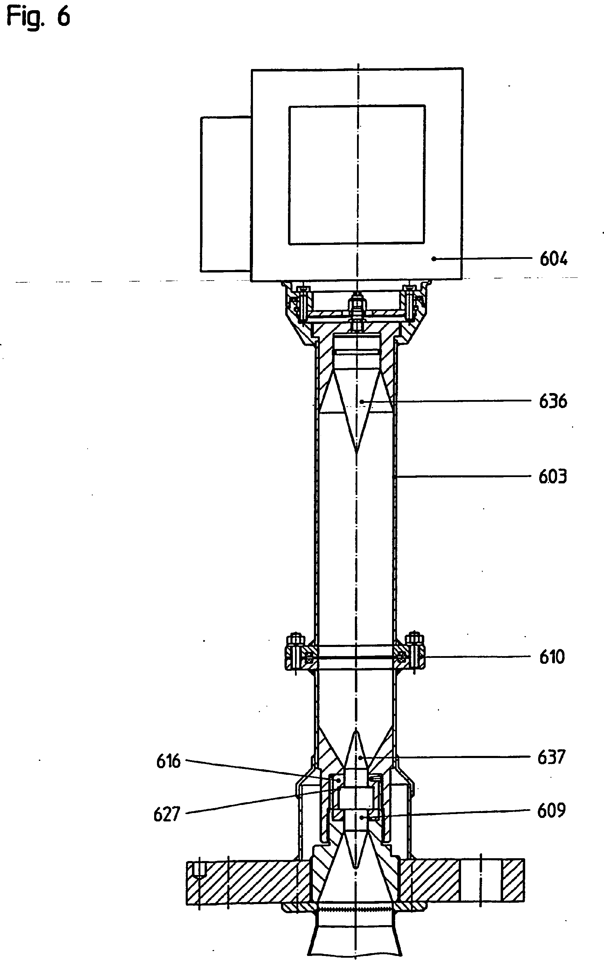

Fig. 6 zeigt eine weitere erfindungsgemäße Ausführungsform des Füllstandsmessgerätes, bei dem das Distanzrohr (603) als Lufthohlleiter fungiert, wodurch in vorteilhafter Weise die elektrische Leitung zur Übermittlung der Mikrowellenimpulse zwischen dem Elektronikraum (604) und der, in den Behälter abstrahlenden Hohlleiterfüllung (609) ersetzt ist. Die Einkopplung der Mikrowellen in den Lufthohlleiter erfolgt über eine Hohlleitereinkopplung (636); die Einkopplung der im Lufthohlleiter übertragenen Mikrowellen in den Sende /Empfangsteil des Messgerätes wird durch einen Hohlleiterübergang (637) bewirkt. Im Distanzrohr (603) kann überdies zur thermischen Abschirmung eine, für Mikrowellen durchlässige, Trennwand (610), vorzugsweise aus Teflon, angeordnet sein. Der Behälterdruck wird am Taper durch eine "Lambda/2"-Verdickung der Hohlleiterfüllung, wie in den Fig. 3A und 3B dargestellt, aufgenommen. Die Ausführungsform ist jedoch natürlich hinsichtlich der Befestigung der Hohlleiterfüllung im Hohlleiter nicht auf eine solche Verdickung der Hohlleiterfüllung beschränkt.

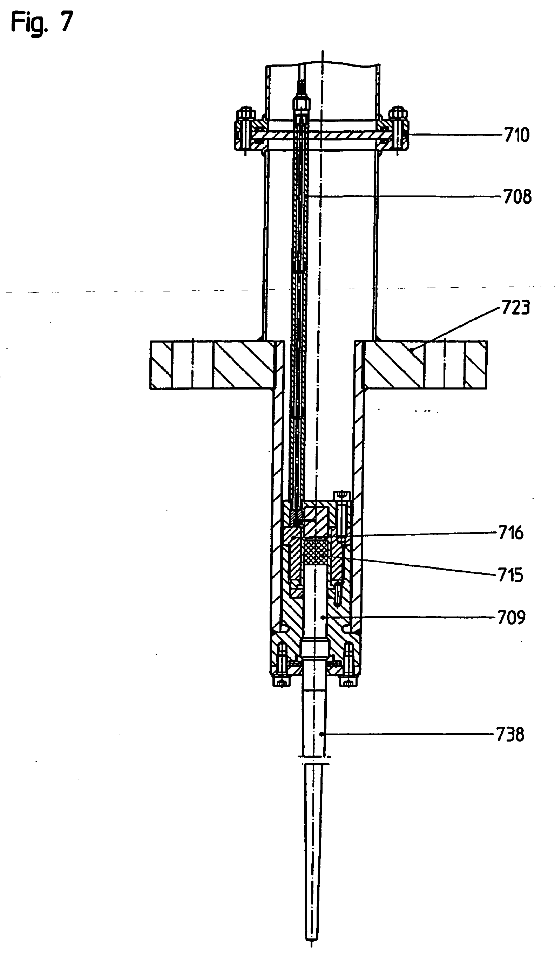

Fig. 7 zeigt eine weitere erfindungsgemäße Ausführungsform des Füllstandsmessgerätes, bei der die Homantenne der bisherigen Ausführungsformen durch eine Stielantenne (738) ersetzt wurde. Die Vorrichtungen zur Druckaufnahme des Behälterdruckes und zur Abschirmung der hohen Behältertemperaturen, sowie der chemisch aggressiven Stoffe, entsprechen hierbei den zuvor beschriebenen Ausführungsformen. Diese Ausführungsform eignet sich besonders für die Messung durch kleine Behälteröffnungen.

## Patentansprüche

1. Mikrowellen-Füllstandsmessgerät zur Messung eines Füllstandes eines in einem Behälter befindlichen Materials, mit
- einer Einbaueinheit (102; 723), mit der das Füllstandsmessgerät in einer Öffnung in dem Behälter befestigbar ist,
- einem Gehäuse mit Elektronikeinsatz (104; 604) zur Gerätesteuerung und Messwertbestimmung,
- einer Sende- und Empfangseinheit (101) zum Aussenden und Empfangen von Mikrowellensignalen, die mit dem Elektronikeinsatz (104; 604) in Verbindung steht und einen Hohlleiter (111; 213; 313; 413; 513; 616; 716), eine Hohlleiterfüllung (109; 209; 309; 425; 509; 609; 709) und eine Antenne (112; 738) umfasst,
wobei der Hohlleiter (111; 213; 313; 413; 513; 616; 716) druckstabil mit der Einbaueinheit (102; 723) verbunden ist und die Hohlleiterfüllung (109; 209; 309; 425; 509; 609; 709) in den Hohlleiter (111; 213; 313; 413; 513; 616; 716) druckstabil eingeschweißt, eingelötet oder eingeschmolzen ist, und
wobei der Hohlleiter (111) eine Hülse (114) enthält, in der die Hohlleiterfüllung (109) eingeschweißt, eingelötet oder eingeschmolzen ist,
wobei die Hülse zweiteilig ausgerührt ist; und
wobei zumindest ein Teil der Hülse (114) aus einem dem Wärmeausdehnungskoeffizienten der Hohlleiterfüllung (109) angepassten Material besteht und die Hülse (114) druckstabil mit dem Hohlleiter (111) verbunden ist.

2. Füllstandsmessgerät nach Anspruch 1,
**dadurch gekennzeichnet, dass** das der Hohlleiter (111) einen Hohlleitermantel (113), eine Hülse (114), eine Druckschraube (116) und einen Druckring (118) umfasst, wobei die Hülse (114) mit der Hohlleiterfüllung (109) druckstabil verschweißt, verlötet oder verschmolzen ist und die Druckschraube (116) über den Druckring (118) die Hülse (114) und die damit verbundene Hohlleiterfüllung (109) druckstabil-mit dem Hohlleitermantel (113) verbindet.

3. Füllstandsmessgerät nach Anspruch 1 oder 2
**dadurch gekennzeichnet, dass** der Hohlleiter (111; 213; 313; 413; 513; 616; 716) mit der Einbaueinheit (102; 723) druckstabil verschweißt ist.

4. Füllstandsmessgerät nach einem der voranstehenden Ansprüche,
**dadurch gekennzeichnet, dass** die Hohlleiterfüllung (109; 209; 309; 425; 509; 609) an einem Ende mit einem Taper (125; 425) ausgebildet ist.

5. Füllstandsmessgerät nach Anspruch 4,
**dadurch gekennzeichnet, dass** der Taper (125; 425) in einem Hohlleitermantel (113; 213; 313; 413; 513) des Hohlleiters (111) druckstabil verpresst ist.

6. Füllstandsmessgerät nach einem der voranstehenden Ansprüche,
**dadurch gekennzeichnet, dass** ein Distanzrohr (103; 603; 703) zwischen dem Elektronikeinsatz (104) und der Sende- und Empfangseinheit (101; 738) zu deren thermischen und räumlichen Trennung angeordnet ist.

7. Füllstandsmessgerät nach Anspruch 6,
**dadurch gekennzeichnet, dass** wenigstens eine das Distanzrohr (103; 603; 703) quer unterteilende Trennwand (110; 610; 710) vorhanden ist, die das Distanzrohr (103; 603; 703) in zwei zwischen dem Elektronikeinsatz (104) und der Einbaueinheit (102; 723) aufeinanderfolgende, voneinander thermisch isolierte Abschnitte unterteilt.

8. Füllstandsmessgerät nach Anspruch 6 oder 7,
**dadurch gekennzeichnet, dass** sich an einem Ende des Distanzrohrs (603) eine Hohlleitereinkopplung (636) und am anderen Ende des Distanzrohrs (603), getrennt durch eine für Mikrowellen durchlässige Trennwand (610), ein Hohlleiterübergang (637) befinden, zwischen denen in Kombination mit dem als Lufthohlleiter fungierenden Distanzrohr (603) die Mikrowellensignale ohne Kabel- und Leitungsverbindungen übertragen werden.

9. Füllstandsmessgerät nach Anspruch 6 oder 7,
**dadurch gekennzeichnet, dass** der Elektronikeinsatz (104) und die Sende- und Empfangseinheit (101) mittels einer in dem Distanzrohr (103; 710) verlaufenden, sich durch die Trennwand (110; 710) erstreckenden elektrischen Leitung (107, 108) zur Übertragung der Mikrowellensignale verbunden sind.

10. Füllstandsmessgerät nach Anspruch 9,
**dadurch gekennzeichnet, dass** die elektrische Leitung zwischen dem Elektronikeinsatz (104) und der Sende- und Empfangseinheit (101) sich aus einem Kabel (107) und einer hiermit verbundenen Luftkoaxialleitung (108) zusammensetzt, wobei sich die Verbindungsstelle zwischen dem Kabel (107) und der Luftkoaxialleitung (108) in der Nähe der Trennwand (110) befindet.

11. Füllstandsmessgerät nach Anspruch 10,
**dadurch gekennzeichnet, dass** sich die Verbindungsstelle zwischen dem Kabel (107) und der Luftkoaxialleitung (108) in dem von der Sende- und Empfangseinheit (101) durch die Trennwand (110) abgetrennten Abschnitt befindet.

12. Füllstandsmessgerät nach einem der Ansprüche 6-11,
**dadurch gekennzeichnet, dass** die Trennwand (110) aus einem Material mit geringer Wärmeleitfähigkeit besteht.

13. Füllstandsmessgerät nach einem der Ansprüche 6-12,
**dadurch gekennzeichnet, dass** das Distanzrohr (103; 603; 703) aus metallischem Material besteht.

## Claims

1. A microwave fill level measuring device for measuring the fill level of a material, the material being located in a container, comprising
- an installation unit (102; 723), by means of which the fill level measuring device is attachable in an opening in the container,
- a housing with an electronic insert (104; 604) for device control and measured value determination,
- a transmitting and receiving unit (101) for transmitting and receiving microwave signals, which transmitting and receiving unit (101) is in communication with the electronics insert (104; 604) and comprises a hollow-conductor (111; 213; 313; 413; 513; 616; 716), a hollow-conductor filling (109; 209; 309; 425; 509; 609;709) and an antenna (112; 738),
wherein the hollow conductor (111; 213; 313; 413; 513; 616; 716) is connected to the installation unit (102; 723) so as to be stable under pressure, and the hollow-conductor filling (109; 209; 309; 425; 509; 609; 709) is welded, soldered or melted into the hollow conductor (111; 213; 313; 413; 513; 616; 716) so as to be stable under pressure, and
wherein the hollow conductor (111) comprises a sleeve (114) into which the hollow-conductor filling (109) is welded, soldered or melted,
wherein the sleeve is made in two parts; and
wherein at least part of the sleeve (114) is made of a material that is adapted to the thermal expansion coefficient of the hollow-conductor filling (109), and the sleeve (114) is connected to the hollow conductor (111) so as to be stable under pressure.

2. The fill level measuring device according to claim 1,
**characterised in that** the hollow conductor (111) comprises a hollow-conductor jacket (113), a sleeve (114), a pressure screw (116) and a pressure ring (118), wherein the sleeve (114) is welded, soldered or melted to the hollow-conductor filling (109) so as to be stable under pressure, and the pressure screw (116) by way of the pressure ring (118) connects the sleeve (114), and the hollow-conductor filling (109) connected thereto, to the hollow-conductor jacket (113) so as to be stable under pressure.

3. The fill level measuring device according to claim 1 or 2,
**characterised in that** the hollow conductor (111; 213; 313; 413; 513; 616; 716) is welded to the installation unit (102; 723) so as to be stable under pressure.

4. The fill level measuring device according to any one of the preceding claims,
**characterised in that** on one end the hollow-conductor filling (109; 209; 309; 425; 509; 609) comprises a taper (125; 425).

5. The fill level measuring device according to claim 4,
**characterised in that** the taper (125; 425) is pressed into a hollow-conductor jacket (113; 213; 313; 413; 513) of the hollow conductor (111) so as to be stable under pressure.

6. The fill level measuring device according to any one of the preceding claims,
**characterised in that** a distance tube (103; 603; 703) is arranged between the electronics insert (104) and the transmitting and receiving unit (101; 738) so as to separate them thermally and spatially.

7. The fill level measuring device according to claim 6,
**characterised in that** there is at least one partition (110; 610; 710) that transversely partitions the distance tube (103; 603; 703), which partition partitions the distance tube (103; 603; 703) into two successive sections between the electronics insert (104) and the installation unit (102; 723), which sections are thermally insulated from each other.

8. The fill level measuring device according to claim 6 or 7,
**characterised in that** at one end of the distance tube (603) a hollow-conductor inlet (636), and at the other end of the distance tube (603), separated by a partition (610) that is permeable to microwaves, a hollow-conductor changeover (637) are arranged , between which, in combination with the distance tube (603) that acts as the hollow air-conductor, the microwave signals are transmitted without cable- and line connections.

9. The fill level measuring device according to claim 6 or 7,
**characterised in that** the electronics insert (104) and the transmitting and receiving unit (101) are connected by means of an electrical line (107, 108), which is arranged in the distance tube (103; 710) and extends through the partition (110; 710), for transmission of the microwave signals.

10. The fill level measuring device according to claim 9,
**characterised in that** the electrical line between the electronics insert (104) and the transmitting and receiving unit (101) comprises a cable (107) and a coaxial air line (108) connected to said cable (107), wherein the connection position between the cable (107) and the coaxial air line (108) is near the partition (110).

11. The fill level measuring device according to claim 10,
**characterised in that** the connection position between the cable (107) and the coaxial air line (108) is located in the section that is separated, by the partition (110), from the transmitting and receiving unit (101).

12. The fill level measuring device according to any one of claims 6-11,
**characterised in that** the partition (110) comprises a material of low thermal conductivity.

13. The fill level measuring device according to any one of claims 6-12,
**characterised in that** the distance tube (103; 603; 703) comprises a metallic material.

## Revendications

1. Instrument de mesure de niveau de remplissage à micro-ondes destiné à mesurer le niveau de remplissage d'un matériau se trouvant dans un conteneur, comportant,
- une unité de montage (102 ; 723) avec laquelle l'instrument de mesure de niveau de remplissage fixable dans une ouverture dans le conteneur,
- un boîtier avec insert électronique (104 ; 604) pour commander l'instrument et déterminer la valeur mesurée,
- une unité d'émission et de réception (101) destinée à émettre et à recevoir des signaux micro-ondes, qui est en liaison avec l'insert électronique (104 ; 604) et comprend un guide d'ondes (111 ; 213 ; 313 ; 413 ; 513 ; 616 ; 716), une masse de remplissage de guide d'ondes (109 ; 209 ; 309 ; 425 ; 509 ; 609 ; 709) et une antenne (112 ; 738),
le guide d'ondes (111 ; 213 ; 313 ; 413 ; 513 ; 616 ; 716) étant relié de manière stable en pression avec l'unité de montage (102 ; 723), et la masse de remplissage de guide d'ondes (109 ; 209 ; 309 ; 425 ; 509 ; 609 ; 709) étant soudée, brasée ou fondue de manière stable en pression dans le guide d'ondes (111 ; 213 ; 313 ; 413 ; 513 ; 616 ; 716), et
le guide d'ondes (111) contenant une douille (114), dans laquelle la masse de remplissage de guide d'ondes (109) est soudée, brasée ou fondue,
la douille étant réalisée en deux parties ; et
au moins une partie de la douille (114) étant constituée d'un matériau adapté au coefficient de dilatation thermique de la masse de remplissage (109) et la douille (114) étant reliée de manière stable en pression au guide d'ondes (111).

2. Instrument de mesure de niveau de remplissage selon la revendication 1, **caractérisé en ce que** le guide d'ondes (111) comprend une enveloppe de guide d'ondes (113), une douille (114), une vis de pression (116) et un anneau de pression (118), la douille (114) étant soudée, brasée ou fondue, de manière stable en pression avec la masse de remplissage de guide d'ondes (109), et la vis de pression (116) reliant la douille (114) et la masse de remplissage de guide d'ondes (109) reliée à celle-ci, de manière stable en pression, à l'enveloppe de guide d'ondes (113), par l'intermédiaire de l'anneau de pression (118).

3. Instrument de mesure de niveau de remplissage selon la revendication 1 ou 2,
**caractérisé en ce que** le guide d'ondes (111 ; 213 ; 313 ; 413 ; 513 ; 616 ; 716) est soudé de manière stable en pression avec l'unité de montage (102 ; 723).

4. Instrument de mesure de niveau de remplissage selon l'une des revendications précédentes,
**caractérisé en ce qu'**à une extrémité, la masse de remplissage de guide d'ondes (109 ; 209 ; 309 ; 425 ; 509 ; 609 ; 709) est réalisée avec un cône (125 ; 425).

5. Instrument de mesure de niveau de remplissage selon la revendication 4,
**caractérisé en ce que** le cône (125 ; 425) est enfoncé de manière stable en pression dans une enveloppe de guide d'ondes (113 ; 213 ; 313 ; 413 ; 513).

6. Instrument de mesure de niveau de remplissage selon l'une des revendications précédentes,
**caractérisé en ce qu'**une entretoise d'écartement (103 ; 603 ; 703) est disposé entre l'insert électronique (104) et l'unité d'émission et de réception (101 ; 738) aux fins d'isolation thermique et spatiale de celle-ci.

7. Instrument de mesure de niveau de remplissage selon la revendication 6,
**caractérisé en ce qu'**il existe au moins une cloison de séparation divisant transversalement l'entretoise d'écartement (103 ; 603 ; 703), qui divise l'entretoise d'écartement (103 ; 603 ; 703) en deux sections isolées thermiquement l'une de l'autre, se succédant entre l'insert électronique (104) et l'unité de montage (102 ; 723).

8. Instrument de mesure de niveau de remplissage selon la revendication 6 ou 7,
**caractérisé en ce qu'**il se trouve un coupleur de guide d'ondes (636) à une extrémité de l'entretoise d'écartement (603), et à l'autre extrémité du tube entretoise (603) une transition de guide d'ondes (637), séparés par une cloison de séparation (610) perméable aux micro-ondes, entre lesquels, en association avec l'entretoise d'écartement (603) agissant en tant que guide d'ondes à air, les signaux micro-ondes sont transmis sans liaison câblée ni filaire.

9. Instrument de mesure de niveau de remplissage selon la revendication 6 ou 7,
**caractérisé en ce que** l'insert électronique (104) et l'unité d'émission et de réception (101) sont reliés aux fins de transmission des signaux micro-ondes, au moyen d'un fil électrique (107, 108) s'étendant dans le tube entretoise (103 ; 710), passant à travers la cloison de séparation (110 ; 710).

10. Instrument de mesure de niveau de remplissage selon la revendication 9,
**caractérisé en ce que** le fil électrique, entre l'insert électronique (104) et l'unité d'émission et de réception (101), est constitué d'un câble (107) et d'une ligne coaxiale à air (108) reliée à celui-ci, le point de liaison entre le câble (107) et la ligne coaxiale à air se situant à proximité de la cloison de séparation (110).

11. Instrument de mesure de niveau de remplissage selon la revendication 10,
**caractérisé en ce que** le point de liaison entre le câble (107) et la ligne coaxiale à air (108) se situe dans la section séparée de l'unité d'émission et de réception (101) par la cloison de séparation (110).

12. Instrument de mesure de niveau de remplissage selon l'une des revendications 6 à 11,
**caractérisé en ce que** la cloison de séparation (110) est constituée d'un matériau à faible conductivité thermique.

13. Instrument de mesure de niveau de remplissage selon l'une des revendications 6 à 12,
**caractérisé en ce que** l'entretoise d'écartement (103 ; 603 ; 703) est constitué d'un matériau métallique.
